# EUROPEAN PATENT SPECIFICATION

(11) **EP 1 569 981 B1**
(45) Date of publication and mention of the grant of the patent: **09.08.2006**
(21) Application number: 03796478.0
(22) Date of filing: 25.11.2003
(51) Int. Cl.: C08G 63/688, C08G 63/08, C08G 18/42, C08G 18/46

(54) **SULFONATE-FUNCTIONAL POLYESTER POLYOLS**
SULFONATE-GRUPPEN ENTHALTENDE POLYESTERPOLYOLE
POLYOLS DE POLYESTER A FONCTION SULFONATE

(30) Priority: 03.12.2002 US 430959 P
(43) Date of publication of application: 07.09.2005
(73) Proprietor: DOW GLOBAL TECHNOLOGIES INC., Midland, Michigan 48674 (US)
(72) Inventor: UPSHAW, Thomas, A., Somerset, NJ 08873 (US); PATEL, Bharat K., Edison, NJ 08820 (US); BARTELINK, Camiel F., 4533 BA Terneuzen (NL)
(74) Representative: Raynor, John
(86) International application number: PCT/US2003/037877
(87) International publication number: WO 2004/050741

(56) References cited:
- EP-A- 0 717 057
- EP-A- 0 849 299
- EP-A- 1 074 570
- US-A- 5 344 873
- US-A- 5 695 884
- US-A- 5 929 160
- DATABASE WPI Section Ch, Week 198921 Derwent Publications Ltd., London, GB; Class A23, AN 1989-154500 XP002278627 & JP 01 095126 A (MITSUBISHI KASEI CORP), 13 April 1989 (1989-04-13)

## Description

### Field of the Invention

The present invention relates to polyester polyols. More specifically, the present invention relates to sulfonate-functional polyester polyols and polyurethanes made therefrom.

### Background of the Invention

Polyester polyols are polymers containing at least two hydroxyl groups and at least two ester groups. Typically, polyester polyols are used as reactive intermediates in the manufacture of other polymers such as polyurethanes and polyesters. In addition, polyester polyols are used as diluents in the formulation of polymer-containing products to improve flexibility and other properties. Polyurethanes made using polyester polyols have a variety of uses including, for example, the manufacture of fibers, coatings, elastomers, foams, adhesives, and sealants.

In certain cases, such as in the manufacture of water-dispersible polyurethanes or polymers used as dispersants for polar materials, for example, dyes and pigments, the incorporation of ionic functionality into the polyester polyol can be advantageous. In the field of water-dispersible polyurethanes, U:S. 5,929,160, discloses a chain extended sulfopolyester polyol made by reacting a sulfopolycarboxylic acid or ester with a polyol to produce a sulfopolyester polyol, and then chain extending the sulfopolyester polyol by an esterification reaction with a lower aliphatic lactone. Sulfonate-containing cationic dyeability modifiers for use in polyesters and polyamides are disclosed in U.S. 6,312,805. In the field of magnetic recording media, U.S. 5,695,884, discloses a thermoplastic polyurethane composition wherein the polyurethane has a metal sulfonate group, and teaches that it is preferred that the polyester polyol is prepared by the use of a dicarboxylic acid having a metal sulfonate group as a part of the acid component. The dicarboxylic acid having a metal sulfonate group can be either an aromatic dicarboxylic acid or an aliphatic dicarboxylic acid. Examples of the dicarboxylic acid component having'a metal sulfonate group include sodium 5-sulfoisophthalate, potassium 5-sulfoisophthalate, sodium 2-sulfoterephthalate, and potassium 2-sulfoterephthalate.

The use of sulfonated acids such as 5-sulfoisophthalic acid in the manufacture of polyester polyols can cause problems because the relatively high temperatures needed to react the acid with the polyol can cause discoloration, that is, high color, in the product. High color is generally undesirable for aesthetic reasons, particularly when the polyester polyol is used in a coating application. Furthermore, when the sulfonate-functional dicarboxylic acid is aromatic, for example, in the case of sulfoisophthalic acids, the sulfonate group often has restricted mobility due to its bonding to the rigid phthalic acid moiety. The restricted mobility can adversely affect the dispersing properties of the corresponding polyurethane.

It would be desirable to have improved sulfonate-functional polyester polyols that can be prepared from carboxylic acids that do not have sulfonate functionality.

### Summary of the Invention

The present invention provides sulfonate-functional polyester polyols that are derived from reactants including an unsaturated polycarboxylic acid or derivative thereof, a polyol, a lactone, and a sulfonating agent, wherein the unsaturated polycarboxylic acid or derivative thereof is substantially free of sulfonate-functionality. The invention includes polyurethanes prepared from the polyols of the invention.

By virtue of the present invention, it is now possible to provide sulfonate-functional polyester polyols that have low color. As a result, the sulfonate-functional polyester polyols of the present invention can be used, for example, as additives or reactive diluents to improve properties of compositions, or as reactive intermediates in the manufacture of polyurethanes having low color. Typical end uses for the polyurethanes of the present invention include, for example, water-dispersible polyurethanes, coatings, foams, fibers, sealants, adhesives and dispersants for dyes, pigments and particulate materials, for example, magnetic particles used in magnetic recording media.

The present invention also includes a process for manufacturing sulfonate-functional polyester polyols, the process including the steps of: reacting an unsaturated polycarboxylic acid or derivative thereof with a polyol to make an unsaturated polyol; reacting the unsaturated polyol with a sulfonating agent to form a sulfonate-functional polyol; and reacting the sulfonate-functional polyol with a lactone to provide the sulfonate-functional polyester polyol. Advantageously, in accordance with the present invention, the reaction of the unsaturated polycarboxylic acid or derivative thereof and the polyol can be conducted at an elevated temperature, that is, high enough to promote the reaction, while avoiding color formation since the sulfonate-furictionality is not introduced until after the unsaturated polyol is formed. Then, the sulfonation can be conducted at a lower temperature sufficient to promote the sulfonation, without promoting the formation of color in the sulfonate-functional polyol.

### Detailed Description of the Invention

The process of the invention prepares a sulfonate-functional polyester polyols from reactants including an unsaturated polycarboxylic acid or derivative thereof, a polyol, a lactone, and a sulfonating agent.

The unsaturated polycarboxylic acid or derivative thereof suitable for use in accordance with the present invention is maleic acid, fumaric acid, itaconic acid, mesaconic acid, citraconic acid, muconic acid, anhydride of one of said acids, or a mixture thereof. mesaconic acid citraconic acid, muconic acid, an anhydride of one of said acids, or a mixture thereof. Examples of preferred dicarboxylic acids include, for example, maleic acid, fumaric acid and itaconic acid An especially preferred ethylenically unsaturated dicarboxylic acid or derivative is maleic acid or maleic anhydride. The amount of the unsaturated polycarboxylic acid used to make the sulfonate-functional polyester polyol is not critical to the present invention and is advantageously from about 0.5 to about 20 weight percent based on the total weight of reactants used to make the sulfonate-functional polyester polyol. Preferably, the amount of the unsaturated polycarboxylic acid is from about 20 to about 80 weight percent, based on the total weight of the unsaturated polycarboxylic acid and polyol used to make the unsaturated polyol. Mixtures of unsaturated polycarboxylic acids can be employed. Several unsaturated polycarboxylic acids and derivatives thereof suitable for use in accordance with the present invention are commercially available.

In accordance with the present invention, the unsaturated polycarboxylic acid or derivative thereof is substantially free of sulfonate functionality. As used herein, the term "sulfonate functionality" or "sulfonate-functional" means a -SO₃M group where M is a positively charged counterion, for example, an ammonium or alkali metal ion. The term "sulfonate-functional group" is also referred to in the art as sulfonyl group, sulfo group, sulfonate group, or sulfonic acid group or salt thereof. As used herein, the term "substantially free" means less than 0.1, preferably less than 0.05, and more preferably less than 0.01, sulfonate group equivalents per mole of unsaturated polycarboxylic acid, on average. Stated another way, on average, less than 10 percent, preferably less than 5 percent, and more preferably less than 1 percent of the molecules in the unsaturated polycarboxylic acid starting material will have sulfonate-functionality.

The polyol suitable for use in accordance with the present invention has at least two hydroxyl groups. In a preferred aspect of the invention, the polyol has from about 2 to about 40 carbon atoms. The polyol preferably is saturated. Aliphatic diols having from about 2 to about 12 carbon atoms are preferred. Examples of suitable polyols include 1,2-ethylene glycol, 1,3-propylene glycol, 1,2-propylene glycol, 2,2-diethyl-1,3-propanediol, 2,2-dimethyl-1,3-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-trimethyl-1,6-hexanediol, 2,4-dimethyl-2-ethylhexane-1,3-diol, 3-methyl-1,5-pentanediol, 1,2-cyclohexanediol, 1,3-cyclohexanedimethanol, 1,4-cyclohexanedimethanol, p-xylenediol, and 2,2,4,4-tetramethyl-1,3-cyclobutanediol. Especially preferred polyols are 1,4-butanediol and 1,6-hexanediol. In another aspect of the invention, a polyether glycol can be used as the polyol. Examples of preferred polyether glycols include, for example, polyoxyethylene polyols, polyoxypropylene polyols, and poly(oxypropylene-oxyethylene) polyols, preferably having a number average molecular weight of from about 200 to about 6000. Suitable polyether glycols are commercially available, for example, from The Dow Chemical Company under the trademarks VORANOL^{™} polyols or CARBOWAX^{™} polyols. Mixtures of polyols can be employed.

The amount of polyol used in preparing the sulfonate-functional polyester polyol of the present invention is not critical and advantageously is from about 0.5 to about 50 weight percent, and preferably from about 2 to about 40 weight percent, based on the total weight of the reactants used to make the sulfonate-functional polyester polyol. More preferably, the amount of the polyol is from about 20 to about 80 weight percent, based on the total weight of the unsaturated polycarboxylic acid and polyol used to make the unsaturated polyol. Several polyols suitable for use in accordance with the present invention are commercially available.

The lactone suitable for use in accordance with the present invention advantageously has from about 3 to about 20 carbon atoms. Examples of suitable lactones include: caprolactone; t-butyl caprolactone; zeta-enantholactone; delta-valerolactones; monoalkyl-delta-valerolactones, such as the monomethyl-, monoethyl-, and monohexyl-delta-valerolactones, and the like; monoallcyl, dialkyl, and trialkyl-epsilon-caprolactones such as the monomethyl-, monoethyl-, monohexyl-, dimethyl-, di-n-hexyl, trimethyl-, triethyl-epsilon-caprolactones, 5-nonyl-oxepan-2-one, 4,4,6- or 4,6,6-trimethyl-oxepan-2-one and the like; 5-hydroxymethyl-oxepan-2-one; beta-lactones, for example, beta-propiolactone; beta-butyrolactone or pivalolactone; gamma-lactones, such as gamma-butyrolactone; dilactones, such as lactide; dilactides; glycolides, such as tetramethyl glycolides, and the like; dioxanones, such as 1,4-dioxan-2-one, 1,5-dioxepan-2-one, and the like. The lactones can be the optically pure isomers or two or more optically different isomers or other mixtures. Epsilon-caprolactone and its derivatives, for example, methyl-epsilon-caprolactone, and other seven membered ring lactones are especially preferred. The amount of the lactone used in the sulfonate-functional polyester polyol of the present invention is preferably from about 10 to about 98.5 weight percent, and more preferably from about 40 to about 90 weight percent, based on the total weight of the reactants used to make the sulfonate-functional polyester polyol. Several lactones for use in accordance with the present invention are commercially available.

The sulfonating agent suitable for use in accordance with the present invention can be any compound capable of imparting sulfonate-functionality to the unsaturated polyol. Sulfonating agents can be organic or inorganic. Preferably, the sulfonating agent is an inorganic compound having an oxygen atom bonded to a sulfur atom. Preferably, the sulfonating agent comprises one or more bisulfites or one or more metabisulfites or mixtures thereof. Preferred sulfonating agents are the ammonium and alkali metal bisulfites and alkali metal metabisulfites. More preferred sulfonating agents are sodium bisulfite and sodium metabisulfite. Other preferred sulfonating agents include lithium bisulfite, lithium metabisulfite, potassium bisulfite, potassium metabisulfite, ammonium bisulfite and ammonium metabisulfite. Other materials, such as inorganic salts, for example, sodium hydroxide, can be optionally included to control the reactivity and pH of the sulfonating agent. The amount of sulfonating agent used to make the sulfonate-functional polyester polyols of the present invention is not critical, but preferably is sufficient to sulfonate all of the double bonds in the unsaturated polyol. Advantageously, the amount is from about 0.5 to about 20 weight percent, and preferably from about 2 to about 16 weight percent, based on the total weight of the reactants used to make the sulfonate-functional polyester polyol. More preferably, the amount of the sulfonating agents is from about 15 to about 50 weight percent, based on the total weight of the unsaturated polycarboxylic acid, polyol and sulfonating agents used to make the sulfonate-functional polyol. Several suitable sulfonating agents are commercially available.

The processes used to make the sulfonate-functional polyester polyols of the present invention can be batch, continuous, or semi-continuous using conventional equipment, the details of which are known to those skilled in the art.

The first step of the process comprises contacting the unsaturated polycarboxylic acid or derivative thereof with the polyol under reaction conditions sufficient to form an unsaturated polyol. In the case of unsaturated anhydrides, such as maleic anhydride, the first step occurs in two stages. In the first stage, ring opening of the anhydride occurs and one molecule of the polyol, for example, 1,6- hexanediol, is attached to form an ester on one end of the anhydride residue and an acid or carboxylate on the other end. This first stage can be conducted at a relatively low temperature; for example, at from about 60 to about 160°C, or higher if desired. Preferably, the first stage is conducted in the absence of a solvent and in the presence of a catalyst such as, for example, butyl tin hydroxide oxide. In the second stage of the first step, another molecule of the polyol is condensed with the acid group remaining on the anhydride residue to form a second ester group on the unsaturated polyol. Typically, the second stage requires a higher temperature to complete the reaction, for example, from about 160 to about 240°C. Preferably, the second stage is also conducted in the absence of a solvent The first and second stages of the first step of the reaction can be conducted in discrete steps, but preferably are conducted in a common step in the same reaction vessel.

In the second step of the process, the unsaturated polyol is contacted with the sulfonating agent under reaction conditions sufficient to form a sulfonate-functional polyol. Sulfonation of the unsaturated polyol is advantageously carried out using a slight stoichiometric excess of the'sulfonating agent. The sulfonation advantageously is carried out in a suitable solvent such as water. The temperature of the sulfonation step advantageously is from about 10 to about 120°C; preferably from about 25 to about 100°C. The sulfonation also can be optionally assisted, for example, by passing air through the reaction medium or by peroxides such as hydrogen peroxide, benzoyl peroxide; or t-butyl hydrogen peroxide. Preferably, water is removed from the sulfonate-functional polyol reaction product after the sulfonation is completed. Optionally, the sulfonation can be conducted in the presence of one or more solvents that form an azeotrope with water, such as, for example, toluene, in order to enhance the subsequent removal of water from the product, or the azeotrope can be added after all or part of the sulfonation reaction has occurred.

In the third step of the process, the sulfonate-functional polyol is contacted with the lactone under reaction conditions sufficient to form the sulfonate-functional polyester polyol. Advantageously, this step (also referred to in the art as ring-opening polymerization or chain extension) is conducted at a temperature of from about 25 to about 200°C, preferably from about 80 to about 180°C, in the presence of a catalyst. Examples of catalysts that can be used to prepare the sulfonate-functional polyester polyol are those known to persons skilled in the art of polyester preparation, illustrative of which are dibutyltin oxide, antimony oxide, tin oxide, tin octoate, organotin alkanoates, titanium alkoxides, aluminum alkoxides, aluminum oxide alkoxides, alkali metal salts or salts of manganese, cadmium, magnesium, zinc, cobalt, tin, and the like. Advantageously, the reaction is conducted in the absence of a solvent. The molecular weight of the sulfonate-functional polyester polyol can be controlled by the number of lactone molecules that are polymerized onto the sulfonated polyol.

The pressures at which the reaction steps of the present invention are conducted are not critical and advantageously range from about 0.1 to about 3 atmospheres (absolute). Similarly, the time required for each step is not critical and advantageously ranges from about 0:5 towabout 20 hours for each of the first step and second step and from' about 2 to about 100 hours for the third step.

If desired, additional materials can be used to make sulfonate-functional polyester polyols of the present invention in order to impart desired properties. For example, other polyol initiators, antioxidants, stabilizers, acid scavengers, plasticizers, coalescing solvents, reactive diluents, pigments and fillers can be employed. Further details concerning suitable reaction conditions, equipment, reactants, additives and catalysts can readily be determined by those skilled in the art.

Preferably, the sulfonate-functional polyester'polyols of the present invention have low color. Advantageously, the color on the platinum - cobalt scale is less than 50, preferably less than 25 and more preferably less than 15. As used herein, the term "color" means the color as measured according to the method set forth in ASTM-D-1209. Without being bound to any particular theory, it is believed that color is formed by exposure of the sulfonate group to elevated temperatures. In accordance with the present invention, exposure of the sulfonate group to elevated temperatures can be avoided because the unsaturated polycarboxylic acid or derivative thereof used in the first reaction step is substantially free of sulfonate functionality. Thus, the reaction of the unsaturated polycarboxylic acid or derivative thereof with the polyol can be conducted at an elevated temperature sufficient to promote the formation of the unsaturated polyol, while the sulfonation reaction can be conducted at a lower temperature effective to promote the formation of the sulfonate-functional polyol, but avoid the formation of color. Preferably in accordance with the present invention, the maximum temperature of the reaction step wherein the unsaturated polyol is reacted with the sulfonating agent is at least about 20°C, preferably at least about 30°C, less than the maximum temperature at which the reaction of the unsaturated polycarboxylic acid or derivative thereof and the polyol is conducted.

In one aspect of the invention, the sulfonate-functional polyester polyol can be represented by the formula: 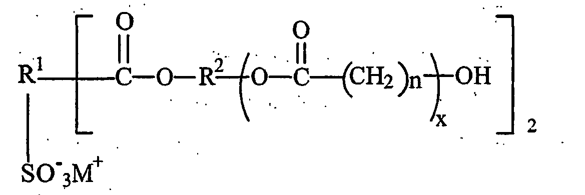 where:
R¹ is a trivalent hydrocarbon group having from about 2 to about 14 carbon atoms;
M⁺ is a positively charged counterion;
x is from about 2 to about 80;
n is from about 2 to about17; and
R² is a divalent hydrocarbon group having from about 2 to about 12 carbon atoms. Preferably, the sulfonate-functional polyester polyol described by the formula above has a color of less than about 50.

Preferably, R¹ is an aliphatic hydrocarbon group having from about 2 to about 8 carbon atoms. More preferably, R¹ is an alkyl group having from about 2 to about 4 carbon atoms. Preferably R² is an aliphatic hydrocarbon group having from about 2 to about 12 carbon atoms. More preferably R² is a residue of an aliphatic diol having from about 4 to 1,5-diisocyanate, diphenylmethane 2, 4' diisocyanate, diphenylmethane 4,4'-diisocyanate, dicyclohexylmethane diisocyanate, isophorone diisocyanate are suitable for this purpose. Preferred polyisocyanates are aromatic diisocyanates such as toluene 2,4-diisocyanate, toluene 2,6-diisocyanate and mixtures thereof, available, for example, from The Dow Chemical Company, under the tradenames VORANATE* T-80, ISONATE* M-124 and ISONATE M-125. Mixtures of polyisocyanates can be employed. The amount of polyisocyanate used in the polyurethane is not critical to the present invention, but advantageously corresponds to a urethane group concentration of about 100 to about 10,000 equivalents per 10⁶ grams of polyurethane.

Likewise, the amount of sulfonate-functional polyester polyol is not critical and is dependent on the desired properties of the polyurethane. Advantageously, the amount of sulfonate-functional polyester polyol is selected to provide a sulfonate group concentration of about 10 to about 5,000, preferably from about 10 to about 3000, equivalents per 10⁶ grams of polyurethane, based on the sulfonate group having a mass of 80 g/mol, that is, excluding the mass of the counter ion.

In addition to the sulfonate-functional polyester polyol, other polyols may be incorporated into the polyurethane in order to provide desired properties. Properties that can be varied include, for example, ductility, water uptake, tensile strength, modulus, abrasion resistance, minimum film formation temperature, and glass transition temperature. Longer chain polyols tend to provide materials that are more ductile and have a lower glass transition temperature ("Tg"), whereas shorter chain polyols tend to contribute to high modulus, and a higher Tg. The other polyol that is different from the sulfonate-functional polyester polyol is preferably selected from the group consisting of polyester polyols, polyether polyols, polycarbonate polyols, hydrocarbon polyols, copolymer polyols prepared from at least 2 monomers used to make these homopolymer polyols, and mixtures thereof. The polyester polyols are preferably predominantly linear polymers having terminal hydroxyl groups, preferably those having two terminal hydroxyl groups. The acid number of the polyester polyols preferably is less than about 10, and more preferably is less than about 3. The polyester polyols can be prepared by esterifying aliphatic or aromatic dicarboxylic acids of from about 4 to about 15, preferably about4 to about 8, carbon atoms with glycols, preferably glycols of from about 2 to about 25 carbon atoms, or by polymerizing lactones of from about 3 to about 20 carbon atoms, the details of which are about 6 carbon atoms. Preferably x is from about 2 to about 40. Preferably n is 3 to about 6. Most preferably, n is 5. The values of x and n are average values.

Advantageously, the molecular weight of the sulfonate-functional polyester polyol of the present invention is from about 450 to about 10,000 grams per mole ("g/mole"). Preferably, the molecular weight is from about 500 to about 5,000 g/mole. As used herein the term "molecular weight" means number average molecular weight. Techniques for determining the number average molecular weight are known to those skilled in the art, for example, end group analysis (OH titration) gel permeation chromatography or high pressure liquid chromatography. Advantageously, the sulfonate equivalent weight is from about 250 to about 5,000 g/mole. In a preferred aspect of the invention, the sulfonate-functional polyester polyol contains one sulfonate equivalent per molecule. The sulfonate equivalent weight can be determined by dividing the average number of sulfonyl groups per molecule into the number average molecular weight.

The sulfonate-functional polyester polyols of the present invention have a variety of uses. For example, the sulfonated polyester polyols can be used as additives in compositions to improve properties such as dispersability in aqueous systems, dispersability of particulate materials, for example, pigments or metal particles, compatibility with other materials or reduced viscosity. In addition, the sulfonate-functional polyester polyols can be used as reactive diluents in a variety of compositions and polymers such as, for example, acrylic polymers and polyesters, in order to improve flexibility. Another example of a use for the sulfonate-functional polyester polyols of the present invention is as a dyeability modifier for incorporation into polyesters and polyamides such as disclosed in U.S.6,312,805.

In a preferred aspect of the present invention, the sulfonate-functional polyester polyols are used to make polyurethanes. In a broad sense, the polyurethanes of the present invention comprise the reaction product of a polyisocyanate and the sulfonate-functional polyester polyol. Advantageously, the polyisocyanate is an aliphatic, cycloaliphatic or aromatic diisocyanate having from about 6 to about 30 carbon atoms and at least two isocyanate groups per molecule. Compounds such as toluene 2,4-- diisocyanate, toluene 2,6-diisocyanate, meta- and para-tetramethylxylene diisocyanate, 4-chlorophenylene 1,3-diisocyanate, naphthylene 1,5-diisocyanate, hexamethylene 1,6-diisocyanate, hexamethylene 1,5-diisocyanate, cyclohexylene 1,4-diisocyanate tetrahydronaphthylene known to those skilled in the art. Polyester polyols made with lactones are also referred to in the art as polylactone polyols. The polyether polyols are preferably predominantly linear polymers that have terminal hydroxyl groups, contain ether bonds and have a molecular weight of from about 600 to about 4000, preferably from about 1000 to about 2000. Suitable polyether polyols can readily be prepared by polymerizing cyclic ethers, such as tetrahydrofuran, or by reacting one or more alkylene oxides having 2 to 4 carbon atoms in the alkylene radical with an initiator molecule that contains two active hydrogen atoms bound in the alkylene radical. Examples of alkylene oxides are ethylene oxide, 1,2-propylene oxide, epichlorohydrin and 1,2- and 2,3-butylene oxide. The alkylene oxides may be used individually, alternately in succession or as a mixture. Examples of suitable initiator molecules are water, glycols, such as ethylene glycol, propylene glycol, 1,4-butanediol and 1,6-hexanediol, amines, such as ethylenediamine, hexamethylenediamine and 4,4'-diaminodiphenylmethane, and amino alcohols, such as ethanolamine. Mixtures of initiators can be employed. The polyether polyols may be used alone or as mixtures. The polycarbonate polyols are generally analogous to the polyether polyols described above, except they are prepared from cyclic carbonates by ring-opening of cyclic carbonates or by transcarbonylation reactions of dialkyl carbonates with one or more polyols, as is well known in the art. Examples of suitable carbonates include ethylene carbonate, 1,2-propylene carbonate, 1,3-propylene carbonate, 1,4-butylene carbonate, 1,3 butylene carbonate, dimethyl carbonate, diethyl carbonate and others known to those skilled in the art. Examples of polyols useful for preparation of polycarbonate polyols include the polyols noted below as polyols suitable for use as the other polyol, as well as the polyols noted above for preparation of polyester polyols. Examples of preferred polyols for use as the other polyol include, diols of 2 to 18, preferably 2 to 10, carbon atoms, for example, 1,2-ethanediol, 1,3-propanediol, 1,4-butanediol, 1,5-pentanediol, -1,6-hexanediol, 1,10-decanediol, 2-methyl-1,3-propanediol, 2-methyl-2-butyl-1,3-propanediol, 2,2-dimethyl-1,3-propane-diol, 2,2-dimethyl-1,4-butanediol, 2-ethyl-2-butyl-1,3-propanediol, neopentylglycol hydroxypivalate, diethylene glycol, triethylene glycol and methyldiethanolamine. The diols may be used individually or as mixtures. Diamines of 2 to 15 carbon atoms, such as ethylenediamine, 1,6-hexamethylenediamine, 4,9-dioxododecane-1,12-diamine or 4,4'-diamino-diphenylmethane, may also be used. In addition, water can be in place of or in addition to the other polyol, when, for example, it is desired to make a foam polyurethane. The amount of such other polyols can be determined by those skilled in the art depending on the desired properties of the polyurethane. Advantageously, such other polyols will be present in an amount from about 0 to 35 weight percent based on the total weight of the reactants used to make the polyurethane. Mixtures of polyols, can be employed.

The methods by which the polyurethanes of the present invention are prepared are not critical. In general, the polyurethanes are made by a well-known polyaddition reaction in which polyfunctional hydroxyl - containing or amino containing compounds are allowed to react with polyisocyanates.

For example, in the bulk polymerization method, the sulfonate-functional polyester polyol, other polyols (if used), and the polyisocyanate are rapidly mixed and heated on a conveyor belt to be polymerized. In the melt polymerization method, the reactants are polymerized while being kneaded by a single-screw extruder or a multi-screw extruder. The molecular weight of the polyurethane obtained after being subjected to the above-described polymerization methods frequently is not sufficiently high. Therefore, the polyurethane thus obtained may be further subjected to a curing step, also known as solid-phase polymerization, whereby a thermoplastic polyurethane having the desired molecular weight can be obtained. The preferred mixing ratio of the components for the preparation of the thermoplastic polyurethane is set so that the proportion of NCO groups of the polyisocyanate is preferably 0.5 to 1.5, and more preferably 0.8 to 1.2, based on the number of total OH groups, including hydroxyl groups of the sulfonated polyester polyol and hydroxyl groups of the other polyols: Examples of suitable catalysts for the preparation of the polyurethanes and for the crosslinking reaction are tertiary amines, such as triethylamine, triethylenediamine, N-methyl -pyridine and N-methylmorpholine, metal salts, such as tin octanoate, lead octanoate and zinc stearate, and organo-metallic compounds, such as dibutyltin dilaurate. The suitable amount of catalyst is dependent on the activity of the catalyst. Typical catalyst amounts are from 0.005 to 0.3, preferably from 0.01 to 0.1, part by weight per 100 parts by weight of polyurethane: The identity and method of use of catalysts in the preparation of polyurethanes are well known to those skilled in the art.

In a preferred aspect of the invention, thermoplastic polyurethanes are prepared in the absence of a solvent in an extruder. Conventional extruders that are equipped with one screw or two corotating or counterrotating screws may be used. Preferred extruders have additional kneading elements. Suitable extruders include, for example, extruders of the ZKS series from Wemer & Pfleiderer, Stuttgart, Germany. The individual components can be fed to the extruder either in molten form or in solid form, for example as flakes. The reactants can be mixed either outside the extruder or in the extruder itself. If different polyisocyanates are used, they may be premixed. The type and number of feeds and the residence time in the extruder are dependent on the reaction conditions required in each case, for example, on the reactivity of the components, the heat of reaction, etc. The reaction temperature is in general from about 120 to about 200°C, although higher or lower temperatures can be used. The temperature may be varied during the reaction; for example, it may be increased in an advantageous manner from one section of the extruder to the other. The product discharged from the extruder is advantageously recovered and comminuted in a conventional manner, for example, granulated under water and dried. If required, heating at from about 50 to about 80°C may follow.

In certain aspects of the invention, for example, thermoplastic polyurethanes, the polyurethanes prepared according to the invention are preferably soluble in conventional polar solvents, such as, for example, ethers, such as tetrahydrofuran or dioxane, ketones, such as methyl ethyl ketone or cyclohexanone, esters, such as ethyl acetate, amides, such as dimethylformamide, or hydrocarbons, such as alkanes or aromatics, or mixtures of solvents.

The polyurethanes of the present invention may be used in a variety of applications including, for example, as coatings, adhesives, sealants, waterborne dispersions, foams, fibers, and as dispersants for particulate materials and/or polar materials. Examples of classes of particulate materials include metals and metal oxides, pigments, ceramics, zeolites and molecular sieves. Examples of polar materials that may or may not be particulate include dyes, inks, colorants, modifiers, stabilizers, plastizers and reactive diluents. The polyurethanes of the present invention may be useful to help bond, stabilize, compatibilize or disperse particulate materials or enhance compatibility with a coating or other material.

In accordance with the present invention, polyurethanes made using the sulfonate-functional polyester polyols are particularly suitable for dispersing magnetic particles, especially finely divided magnetic particles, as used for magnetic recording systems, for example in computer data storage tapes, audio tapes or video tapes. Magnetic particles used in magnetic recording systems are also referred to in the art as metal pigments. Compared to commercially available materials, the magnetic dispersions obtained using the polyurethanes of the present invention can have better flow properties and the magnetic layers produced therefrom can have higher gloss values. Moreover, they can provide good dispersing effect and rapid dispersing, good stabilization of the dispersion, low solvent requirements in the preparation of the dispersion, good leveling on casting of the dispersion, high pigment content of the magnetic layer, good orientation of the magnetic needles and good mechanical properties of the magnetic layer, even at high temperatures.

The polyurethanes of the present invention can be used as the sole binding component for the production of magnetic layers, but it is often advantageous to add at least one further binder component in an amount of less than about 70 percent, preferably less than about 40 percent, by weight, based on the resulting total weight of binder.

A preferred cobinder is a polyvinyl formal binder prepared by hydrolyzing a polymer of a vinyl ester and then reacting the resulting vinyl alcohol polymer with formaldehyde. The polyvinyl binder preferably contains at least about 65 percent, in particular at least about 80 percent by weight, of vinyl formal groups. Particularly suitable polyvinyl binders contain from about 5 to about 13 percent, by weight, of vinyl alcohol groups and from about 80 to about 88 percent, by weight, of vinyl formal groups and have a density of about 1.2 and a viscosity of from about 50 to 120 millipascals ("mPa") measured at 20°C using a solution of 5 g of polyvinyl formal in 100 milliliters ("ml") of 1:1 (volume) phenol/toluene.

In addition to the polyvinyl formal binders, vinyl chloride/diol mono-or di(meth)acrylate copolymers, which can be prepared, for example, in a manner known in the art by solution copolymerization or suspension copolymerization of vinyl chloride and the diol mono(meth)acrylate or di(meth)acrylate, are also suitable. The preferred diol mono- or diacrylate or-methacrylate used for this purpose is an esterification product of acrylic acid or methacrylic acid with the corresponding molar amount of aliphatic diol of 2 to 4 carbon atoms, such as ethylene glycol, 1,4-butanediol and preferably propanediol, the propanediol preferably comprising about 50 to about 100 percent, by weight, of 1,3-propanedioi and from about 0 to about 50 percent by weight of 1,2-propanediol. The copolymers preferably contain from about 50 to about 95 percent by weight of vinyl chloride and from about 5 to about 50 percent by weight of diol acrylate or diol methacrylate. Particularly suitable copolymers preferably contain from about 70 to about 90 percent by weight of vinyl chloride and from about 10 to about 30 percent by weight of diol monoacrylate or diol monomethacrylate. A 15 percent solution of the preferred copolymers, such as the vinyl chloride/propanediol monoacrylate copolymers, in a mixture of equal parts by volume of tetrahydrofuran and dioxane, has a viscosity of about 30 mPa at 25°C.

In addition, phenoxy resins having repeating units of the formula: 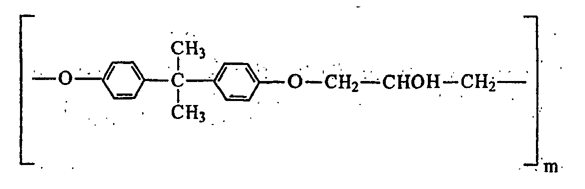 where m is approximately equal to 100, may be used as cobinders. These polymers are commercially available from Inchem Corporation under the tradename Inchemrez^{™}.

Cellulose ester binders are also suitable for use in the binder mixture. These are esterification products of cellulose with nitric acid or with carboxylic acids of 1 to 4 carbon atoms, for example, cellulose acetate, cellulose triacetate, cellulose acetopropionate or cellulose acetobutyrate.

Typical magnetic materials that may be used include those that influence the properties of the resulting magnetic layers, such as, for example, gamma-iron (III) oxide, finely divided magnetite, ferromagnetic undoped or doped chromium dioxide, cobalt-modified gamma-iron (III) oxide, barium ferrites or ferromagnetic metal particles. Acicular, in particular dendrite-free, cobalt-modified or unmodified gamma-iron (III) oxide and ferromagnetic chromium dioxide and metallic pigments such as iron, cobalt, nickel, or alloys thereof are preferred. The particle size is in general from 0.01 to 2 micrometers (also referred to as "microns") preferably from 0.02 to 0.5 microns. The specific surface area is in general at least'40, preferably from 50 to 200 square meters per gram ("m²/g") determined by the BET method, S. Brunauer, P.H. Emmett and E. Teller, J. Ann. Chem. Soc., 60, 309 (1938).

The ratio of magnetic material to binder is advantageously from about 1 to about 10, in particular from about 3 to about 6, parts by weight of magnetic material per part by weight of the binder mixture. It is particularly advantageous that, due to the improved dispersing properties of the polyurethanes of the present invention, smaller magnetic particles, for example those having an average particle size of 0.02-0.05 microns, can be effectively dispersed even at high magnetic material concentrations, for example 70 to 90 percent by weight, in the magnetic layers based on the total weight of the magnetic layers, without deterioration of the mechanical-elastic properties or the performance characteristics.

Moreover, the novel binder compositions may also contain any combination of crosslinkers; fillers, dispersants, and further additives, such as lubricants, carbon black or nonmagnetic inorganic or organic particulate materials. The lubricants used may be, for example, carboxylic acids of about 10 to about 20 carbon atoms, in particular stearic acid or palmitic acid, or derivatives of carboxylic acids, such as their salts, esters or amides, or mixtures of two or more thereof.

Examples of suitable nonmagnetic inorganic particulate materials include carbon black, graphite, metals, metal oxides, metal carbonates, metal sulfates, metal nitrides, metal carbides and metal sulfides, and more specifically TiO₂ (rutile or anatase), TiO₃, cerium oxide, tin oxide, tungsten oxide, antimony oxide, ZnO, ZrO₂, SiO₂, Cr₂O₃, α-Al₂O₃, β-Al₂O₃, γ-Al₂O₃, α-Fe₂O₃, goethite, corundum, silicon nitride, titanium carbide, magnesium oxide, boron nitride, molybdenum sulfide, copper oxide, MgCO₃, CaCO₃, BaCO₃, SrCO₃, BaSO₄, silicon carbide and titanium carbide. These compounds may be present either individually or in combination with one another and are not restricted in shape and size. The compounds need not be present in pure form but may have been surface-treated with other compounds or elements. Organic fillers, such as polyethylene or polypropylene, may also be used.

The nonmagnetic and nonmagnetizable substrates are not critical and include the conventional rigid or flexible substrate materials, in particular films of linear polyesters, such as polyethylene terephthalate, in general in thicknesses of from 4 to 200 microns, in particular from 6 to 36 microns. Recently, the use of magnetic layers on paper substrates for electronic computing and counting machines has also become important; here too, the binders of the present invention can be advantageously used.

Magnetic recording media using the polyurethanes of the present invention can be produced in any manner known to those skilled in the art. For example, the magnetic pigment dispersion can be prepared in a dispersing apparatus, for example a tubular ball mill or a stirred ball mill, from the magnetic material and of the binders with the optional addition of lubricants and dispersants. Then, after admixing a polyisocyanate crosslinking agent and optional filtration, the dispersion is applied by means of a conventional coating apparatus, for example a knife coater, to the nonmagnetic substrate. Advantageously, percent by weight, in the magnetic layers based on the total weight of the magnetic layers, without deterioration of the mechanical-elastic properties or the performance characteristics.

Moreover, the novel binder compositions may also contain any combination of crosslinkers; fillers, dispersants, and further additives, such as lubricants, carbon black or nonmagnetic inorganic or organic particulate materials. The lubricants used may be, for example, carboxylic acids of about 10 to about 20 carbon atoms, in particular stearic acid or palmitic acid, or derivatives of carboxylic acids, such as their salts, esters or amides, or mixtures of two or more thereof.

Examples of suitable nonmagnetic inorganic particulate materials include carbon black, graphite, metals, metal oxides, metal carbonates, metal sulfates, metal nitrides, metal carbides and metal sulfides, and more specifically TiO₂ (rutile or anatase), TiO₃, cerium oxide, tin oxide, tungsten oxide, antimony oxide, ZnO, ZrO₂, SiO₂, Cr₂O₃, α-Al₂O₃, β-Al₂O₃, γ-Al₂O₃, α-Fe₂O₃, goethite, corundum, silicon nitride, titanium carbide, magnesium oxide, boron nitride, molybdenum sulfide, copper oxide, MgCO₃, CaCO₃, BaCO₃, SrCO₃, BaSO₄, silicon carbide and titanium carbide. These compounds may be present either individually or in combination with one another and are not restricted in shape and size. The compounds need not be present in pure form but may have been surface-treated with other compounds or elements. Organic fillers, such as polyethylene or polypropylene, may also be used.

The nonmagnetic and nonmagnetizable substrates are not critical and include the conventional rigid or flexible substrate materials, in particular films of linear polyesters, such as polyethylene terephthalate, in general in thicknesses of from 4 to 200 microns, in particular from 6 to 36 microns. Recently, the use of magnetic layers on paper substrates for electronic computing and counting machines has also become important; here too, the binders of the present invention can be advantageously used.

Magnetic recording media using the polyurethanes of the present invention can be produced in any manner known to those skilled in the art. For example, the magnetic pigment dispersion can be prepared in a dispersing apparatus, for example a tubular ball mill or a stirred ball mill, from the magnetic material and of the binders with the optional addition of lubricants and dispersants. Then, after admixing a polyisocyanate crosslinking agent and optional filtration, the dispersion is applied by means of a conventional coating apparatus, for example a knife coater, to the nonmagnetic substrate. Advantageously, magnetic orientation is carried out before the liquid coating mixture is dried on the substrate; the latter is advantageously effected in the course of from about 10 to about 200 seconds at from about 50 to about 90°C. The magnetic layers can be calendered and compacted on conventional equipment by being passed between heated and polished rolls, if necessary with application of pressure and at temperatures of from about 25 to about 100°C, preferably from about 60 to about 90°C. In the case of crosslinking binders, it is preferred to carry out the calendering before the crosslinking is complete, since the hydroxyl-containing polymers in the uncrosslinked state are very thermoplastic without being tacky. The thickness of the magnetic layer is in general from about 0.5 to about 20 microns preferably from about 1 to about 10 microns. In the case of the production of magnetic tapes, the coated films are slit in a longitudinal direction into the conventional widths.

In a preferred aspect of the present invention, the polyurethane for use in magnetic recording media is a thermoplastic block copolyurethane having a block structure in which hard segments B and soft segments A alternate in the form --A--B--A--B--AA thermoplastic block copolyurethane may have, for example, a structure A--B--A, where these individual blocks are present as separate microphases. The thermoplastic block copolyurethane has a softening point or a softening range at a specific temperature or within a specific temperature range. Above this softening point or softening range, the polyurethane is plastically deformable, said polyurethane retaining the form produced in the plastic state on returning temperatures below the softening point or softening range and behaving essentially like a thermosetting plastic.

In accordance with the present invention, a hard segment (B) desirably has a glass transition temperature of at least about 20°C, preferably at least about 40°C, and more preferably above at least about 50°C, and a soft segment (A), which is covalently bonded to a hard segment, has a glass transition temperature of less than about 20°C.

In accordance with the present invention, the polyurethane has an anchor group including any functional group that is capable of interacting with ionic or nonionic, polar compounds. In particular, anchor groups are understood as meaning those functional groups that are capable of interacting with the surface of inorganic filler materials, in particular with the surface of inorganic magnetic or magnetizable particles. According to the present invention, the thermoplastic block copolyurethane that can be used in a magnetic recording medium contains at least one sulfonate as an anchor group. Preferably, at least some sulfonate groups are provided by the sulfonate-functional polyester polyol. Other functional groups that can serve as anchors include, for example, carboxyl groups, other sulfo groups, phosphonic acid groups, phosphoric acid groups or salts of such groups.

The polyurethanes of the present invention may have anchor groups either only in one or more soft segments (A) or only in one or more hard segments (B), or both in one or more soft segments (A) and in one or more hard segments (B). The number of anchor groups in the soft segments (A) may be greater than the number of anchor groups in the hard segments (B). For example, the ratio of anchor groups in the soft segments (A) to the number of anchor groups in the hard segments (B) may be from about 1000:1 1 to about 100:1,or less, for example, from about 10:1 to about 1.5:1. Conversely, the ratio of anchor groups in the hard segments (B) to the number of anchor groups in the soft segments (A) may likewise be from about 1000:1 to about 100:1, or less, for example from about 10:1 to about 1.5:1.

In a preferred aspect of the invention, the number of anchor groups that are present in the hard segments (B) of the thermoplastic polyurethane is greater than the number of anchor groups that are present in the soft segments (A). In a preferred aspect of the invention, the number of anchor groups that are present in the total number of hard segments (B) present in the polyurethane is at least about five times greater, preferably at least about 10 times greater, than the total number of anchor groups in the soft segments (A). In a further preferred aspect of the invention, the novel thermoplastic polyurethane has essentially no anchor groups in the soft segments (A).

In a preferred embodiment of the invention, the soft segments (A) have glass transition temperatures of from about -50°C to about 20°C. In a further preferred aspect of the invention, the glass transition temperatures of the soft segments (A) are from about -30°C to about 0°C. In order to ensure the desired mechanical properties of the thermoplastic polyurethane, the soft segment (A) desirably has a molecular weight of from about 500 to about 25,000 g/mole. In a preferred aspect of the invention, the soft segment (A) has a molecular weight of from about 1000 to about 10,000, more preferably from about 1000 to about 7000, g/mole.

The invention is hereinafter described with reference to the examples, which are not intended to limit the scope of the claims that follow. All parts and percentages are by weight unless otherwise indicated.

### Specific Embodiments of the Invention

### Example 1 - Preparation of Unsaturated Polyol

A 4-neck glass reaction vessel equipped with a water cooled distillation condenser, thermocouple and mechanical stirrer and containing 166.7 grams of maleic anhydride and 401.8 grams of 1,6-hexanediol under a dry nitrogen sparge is heated to 155°C over 30 minutes. Then, 0.227 of butyl tin hydroxide oxide catalyst, sold as Fascat^{™} 4100, by Elf Atochem North America, Inc., Philadelphia, PA., is added to the reactor. The heat is increased gradually over 30 minutes to 200°C and a total of 32.37 grams of water collected by distillation.

### Example 2 - Preparation of Sulfonate-Functional Polyol

The reaction product of Example 1 is allowed to cool down to 111°C. A clear solution of 176.90 grams of anhydrous sodium bisulfite (NaHSO₃) in 420.25 grams of distilled water then ias added to the reaction vessel. The nitrogen sparge is discontinued and the mixture is heated to 80°C arid kept at that temperature for 20 hours. Then, heating of the mixture is resumed and the temperature raised gradually to 167°C. Above 160°C, the water distilled off and after 2 hours, 393.44 grams of water distills overhead. The temperature of the mixture is lowered to 150°C and it is placed under a vacuum that is gradually decreased to 8 mm Hg. After 15 minutes an additional 11.0 grams of water is distilled. The mixture is discharged at 125-50°C into a storage container.

### Example 3 - Preparation of Sulfonate-Functional Polyester Polyol

The reaction product from Example 2 (639.2 grams of it) is placed in a 5-liter 4-neck reaction flask and 2392.6 grams of E-caprolactone (TONE^{™} ECEQ monomer from The Dow Chemical Company) is added to it. The mixture is heated at 85°C with stirring under a vacuum of 12 mm Hg with a dry nitrogen bleed for 45 minutes to remove water moisture. The mixture is heated over 30 minutes to 140°C' and 9.12 grams of a 1 weight percent solution of dibutyltin dilaurate (Dabco^{™} T-12 from Air Products and Chemicals, Inc., Allentown, PA) in TONE ECEQ monomer is added via syringe. The consumption of caprolactone is followed throughout the reaction by gas chromatography. The reaction mixture is heated at 140°C for 24 hours, followed by addition of 0.0934 grams of stannous octoate catalyst (Dabco T-9). Heating is continued for another 45 hours. The temperature is raised gradually to 160°C and heated for an additional 4 hours, at which point the unreacted caprolactone concentration (GC) has fallen below 1.0 weight percent. The product is allowed to cool and characterized by titration, showing an acid number of 0.50 and a hydroxyl number of 52.1 (giving a calculated number-average molecular weight of 2154 g/mole). Proton and C-13 NMR analysis, shows peaks consistent with the expected chemical structure. The polydispersity of the polyol (measured by gel permeation chromatography "GPC" analysis) is 1.54.

### Example 4 - Use of Azeotroping Solvent

This example illustrates the use of an azeotroping solvent to help remove the water. The first step (preparation of the unsaturated diol) is carried out following the method of Example 1, using the following raw materials.

| | |
|---|---|
| Maleic Anhydride | 402.3 grams |
| 1,6-Hexanediol | 968.4 grams |
| Fascat 4100 | 0.549 grams |

The reaction mixture from the first step is allowed to cool to 82°C and a clear solution of 425.1 grams of anhydrous sodium bisulfite (NaHSO₃) in 1638 grams of distilled water is added to the reaction vessel. The nitrogen sparge is discontinued and the mixture is heated at 80°C for 7 hours followed by 50°C for 18 hours. The temperature is raised gradually over 3 hours to 151°C, whereupon 1570 grams of water distills overhead. Toluene (317.6 grams) is added to the reaction mixture, and a Dean-Stark trap and upright condenser are added to the apparatus to collect any remaining water by azeotropic distillation. The mixture is heated to 116°C and another 42.8 grams of water collects over 2 hours in the Dean-Stark trap. The temperature is raised to 140°C and all the toluene is distilled overhead over the course of 2 hours. The reaction mixture is discharged hot from the reaction vessel and allowed to cool.

The reaction product from the previous step (431.1 grams of it) is placed in a 5-Liter 4-neck reaction flask and 584.07 grams of ε-caprolactone (TONE ECEQ monomer) is added to it. The mixture is heated at 80°C with stirring under a vacuum of 20 millimeters ("mm") Hg with a dry nitrogen bleed for 30 minutes to remove any residual toluene and water moisture. The mixture is heated over 20 minutes to 140°C and 2.05 grams of a 1 weight percent solution of stannous octoate catalyst (Dabco T-9) in TONE ECEQ monomer is added via syringe. The consumption of caprolactone is followed throughout the reaction by gas chromatography. The reaction mixture is heated at 140°C for 20 hours and another 1.0 grams of 1 percent stannous octoate solution is added. The mixture is heated for an additional 32 hours, at which point the unreacted caprolactone concentration (GC) has fallen below 1.0 weight percent. The product is discharged from the reactor hot, allowed to cool and characterized by titration, showing an acid number of 0.71 and a hydroxyl number of 103. Proton and C-13 NMR analysis showed peaks consistent with the expected chemical structure and an approximate number-average molecular weight of 1105. The polydispersity of the polyol by GPC analysis is 1.82.

### Example 5 - Preparation of Sulfonate-Functional Polyester Polyol

A sulfonated polyester polyol is prepared following the method of the last step of Example 4 except that the reaction to produce the final sulfonated polyester polyol is carried out at 160°C for the entire course of reaction, the initial catalyst charge is 3.05 grams of a 1 weight percent solution of dibutyl tin dilaurate catalyst (Dabco T-12) in TONE ECEQ monomer, and after 5.5 hours an additional catalyst charge of 3.05 grams of a 1 weight percent solution of stannous octoate catalyst (Dabco T-9) in TONE ECEQ monomer is added. These changes result in a shorter overall reaction time of 25 hours required to produce the sulfonate-functional polyester polyol. The resulting product is characterized by titration and shows an acid number of 1.4 and a hydroxyl number of 42.7.

### Example 6 ― Preparation of Sulfonate-Functional Polyester Polyol

A sulfonated polyester polyol is prepared following the method of Examples 1-3, except that the following amounts of raw materials are used in the first two steps:

| | |
|---|---|
| Anhydride | 147.1 grams |
| 1,6-Hexanediol | 354.5 grams |
| Fascat 4100 | 0.200 grams |
| Sodium bisulfite | 152.8 grams |
| Water | 365 grams |

All of the product from the second step is carried on to the third step, where 846.7 grams of ε-caprolactone is used. In this example, only one catalyst is used in the third step, 8.82 grams of a 1 weight percent solution of stannous octoate catalyst (Dabco T-9) in TONE ECEQ monomer. The catalyst is added at the beginning of the reaction after heating to 160°C, and a temperature of 160°C is maintained until the reaction is complete. These conditions result in a shorter reaction time of 22 hours, and provide a sulfonate-functional polyester polyol product with a hydroxyl number of 83.5 and an acid number of 0.69.

### Example 7 - Preparation of Sulfonate-Functional Polyester Polyol

A sulfonated polyester polyol is prepared according to the method of Example 4, except that no toluene is used. Instead, during the unsaturated diol preparation, 200 grams of Solvesso^{™} 100 solvent from Exxon Mobil Corporation is added following the addition of the Fascat 4100 catalyst to assist in removal of water. The Solvesso 100 is later removed by distillation under reduced pressure following removal of the water at the end of the sulfonated diol preparation step.

### Example 8 - Complete Preparation Using a Titanium Alkoxide Catalyst

### (a) Preparation of Unsaturated Polyol

A 4-neck glass reaction vessel equipped with a thermocouple, water-cooled distillation condenser, and mechanical stirrer and containing 73.54 grams of maleic anhydride and 194.39 grams of 1,6-hexanediol under a dry nitrogen sparge is heated to 155°C over 30 minutes, and then 0.100 grams of butyl tin hydroxide oxide catalyst (sold as Fascat^{™} 4100, by Elf Atochem North America, Inc., Philadelphia, PA.) is added to the reactor. The heat is increased gradually over 30 minutes to 200°C and a total of 13.09 grams of water is collected by distillation over the course of two hours. The reaction mixture is allowed to cool to below 100 °C and analyzed by acid number titration, showing an acid number of 0.188.

### (b) Preparation of sulfonate-Functional Polyol

A clear solution of 74.75 grams of anhydrous sodium bisulfite (NaHSO₃) in 182 grams of distilled water is added to the reaction vessel. The nitrogen sparge is discontinued and the mixture is heated at 80°C for 18 hours. The nitrogen sparge and heating of the mixture is resumed and the temperature raised gradually to 160°C. The water distills off over the course of 2 hours, and 162 grams of water is collected. The mixture is allowed to cool to 150°C and is placed under partial vacuum. The pressure is gradually decreased to 9 mm Hg to further dry the reaction mixture for 30 minutes.

### (c) Preparation of Sulfonate-Functional Polyester Polyol

The temperature of the reaction mixture is reduced to 85°C and 432.43 grams of ε-caprolactone (TONE ECEQ monomer) is added to it. The mixture is stirred under a vacuum of 12 mm Hg with a dry nitrogen bleed for 45 minutes to remove water. The mixture is heated over 30 minutes to 160°C and then 2.25 grams of a freshly-prepared 1 weight percent solution of titanium tetrabutoxide (Tyzor^{™} TBT from E. I. DuPont de Nemours, Inc., Wilmington, DE) in TONE ECEQ monomer is added via syringe. The consumption of caprolactone is followed throughout the reaction by gas chromatography. The reaction mixture is heated at 160°C for 5 hours, at which point the unreacted caprolactone concentration (GC) falls below 0.5 weight percent. The product is allowed to cool and characterized by titration, showing an acid number of 0.33 and a hydroxyl number of 115 (giving a calculated number-average molecular weight of 976 g/mole).

### Example 9 - Preparation of Sulfonate-Functional Polyester Polyol

This example illustrates a method whereby a sulfonate-functional polyester polyol of higher molecular weight can be obtained from one of lower molecular weight by further reaction with caprolactone.

The sulfonated polyester polyol of Example 4 (170 grams) is placed in a 3-liter flask and 1530 grams of ε-caprolactone (TONE ECEQ monomer) are added. The mixture is heated at 80°C for 2 hours with stirring and under a dry nitrogen sparge to remove residual moisture. The mixture is then heated to 140°C and 0.32 grams of Fascat 4100 catalyst are charged to the vessel. The mixture is heated until the unreacted caprolactone drops below 1 weight percent by gas chromatographic analysis. The product is then allowed to cool to 110°C and discharged into a storage container. Analysis of the product'shows a hydroxyl number of 9.85, acid number of 0.59, moisture Content of 0.25 ppm, a GPC polydispersity of 2.8 and a Brookfield viscosity at 80°C (#21 spindle at 1 rpm) of 88,000 centipoise. These data are consistent with the formation of the desired sulfonated polyester polymer of about 10,000 number average molecular weight (roughly 10 times that of the starting material before additional caprolactone is added).

### Example 10 - Preparation of Polyurethane Binder for Mag Media

A 1.5 liter glass reactor fitted with a mechanical stirrer, a thermocouple and condensor is charged with 113.6 gram toluene diisocyanate (0.65 mol), 0.3 gram benzoyl chloride and 353.8 gram tetrahydrofuran. The reactor is heated to 50°C under a N₂ atmosphere. With the aid of a heating mantle and thermocouple (Model PT-100, Eurotherm Ltd., Worthing, West Sussex, UK), the reaction temperature is controlled by a Julabo LC1 control unit (Model Julabo LC1, Julabo Labcrtechnik GmbH, Seelbach, Germany). While stirring vigorously, 0.33 mole of a sulfonate-functional polyester polyol as made in accordance with Examples 1-3 is added slowly to the TDI/THF mixture. The mixture is allowed to react for 4 hours. During the addition and digestion, the condensor is cooled to -5°C. After digestion, the mixture is collected from the reactor (Product A).

In a another glass reactor (similar to the above), 84.5 g trimethylolpropane (0.65 mol) and 0.3 g dibutyltin dilaurate are dissolved in 164.2 gram tetrahydrofuran and heated to 50°C under a N₂ atmosphere. While stirring vigorously, Product A is slowly added. At frequent intervals during the.reaction, infra-red spectra are recorded. The reaction is allowed to proceed until the absorbance associated with the isocyanate functional group (~2270 cm-1) is no longer present in the mid infra-red spectrum. The total reaction time is approximately 1 hour. After this time, the binder product (Product B) is collected as a 50 percent solution in THF.

The Product B is a yellow to brown liquid with an ether smell (due to the solvent). It has a molecular weight of about 1800 g/mol, determined by end group analysis (OH titration), and a hydroxyl concentration of 3.8 weight percent OH.

Although the invention has been described with respect to specific aspects, those skilled in the art will recognize that the other aspects are intended to be included within the scope of the claims that follow. For example, more than one species from each class of reactants can be used to make sulfonate-functional polyester polyols, for example, maleic anhydride and fumaric acid, or 1, 4-butanediol or 1, 6-hexanediol. The teachings of documents cited herein are incorporated herein by reference.

## Claims

1. A sulfonate-functional polyester polyol derived from reactants comprising: (i) an unsaturated polycarboxylic acid or derivative thereof selected from the group consisting of maleic acid, fumaric acid, itaconic acid, mesaconic acid, citraconic acid, muconic acid, anhydrides of said acids, and any mixture thereof; (ii) an aliphatic diol having from about 2 to about 12 carbon atoms; (iii) a lactone; and (iv) a sulfonating agent: **characterized in that** the unsaturated polycarboxylic acid or derivative thereof is substantially free of sulfonate functionality.

2. The sulfonate-functional polyester polyol of Claim 1 having a color of less than about 50.

3. The sulfonate-functional polyester polyol of Claim 1 wherein the unsaturated polycarboxylic acid or derivative thereof has an average concentration of less than about 0.1 equivalent of sulfonate functionality per molecule.

4. The sulfonate-functional polyester polyol of Claim 1 wherein the lactone is epsilon-caprolactone or methyl epsilon-caprolactone.

5. A polyurethane derived from reactants comprising a polyisocyanate and a sulfonate-functional polyester polyol of Claim 1.

6. A sulfonate-functional polyester polyol having the following formula: 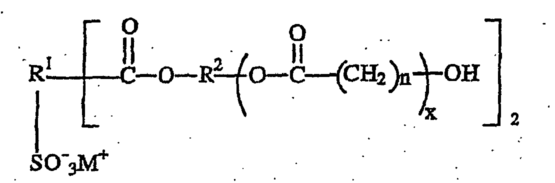 where:
R¹ is a trivalent aliphatic hydrocarbon group having from about 2 to about 8 carbon atoms;
M⁺ is a positively charged counterion;
x is from about 2 to about 80;
n is from about 2 to about 17; and
R² is a divalent hydrocarbon radical having from about 2 to about 12 carbon atoms; **characterized in that** the sulfonate-functional polyester polyol has a color of less than about50.

7. The sulfonate-functional polyester polyol of Claim 6 having a color of less than about 25.

8. The sulfonate-functional polyester polyol of Claim 6 having a molecular weight of from about 450 to about 10,000 g/mole.

9. A process for making a sulfonate-functional polyester polyol having low color, comprising; (a) reacting an unsaturated polycarboxylic acid or derivative thereof selected from the group consisting of maleic acid, fumaric acid, itaconic acid, mesaconic acid, citraconic acid, muconic acid, anhydrides of said acids, and any mixture thereof with an aliphatic diol having from about 2 to about 12 carbon atoms to form an unsaturated polyol; said unsaturated polycarboxylic acid or derivative thereof being substantially free of sulfonate functionality; (b) reacting the unsaturated polyol with a sulfonating agent to form a sulfonate-functional polyol; and (c) reacting the sulfonate-functional polyol with a lactone to provide the sulfonate-functional polyester polyol.

## Patentansprüche

1. Sulfonatfunktionelles Polyesterpolyol, das aus Reaktanten gewonnen ist, die Folgendes umfassen: (i) eine ungesättigte Polycarbonsäure oder ein Derivat derselben aus der aus Maleinsäure, Fumarsäure, Itaconsäure, Mesaconsäure, Citraconsäure, Muconsäure, Anhydriden dieser Säuren und jeder Mischung davon bestehenden Gruppe; (ii) ein aliphatisches Diol mit von etwa 2 bis etwa 12 Kohlenstoffatomen; (iii) ein Lacton; und (iv) ein Sulfonierungsmittel: **dadurch gekennzeichnet, dass** die ungesättigte Polycarbonsäure oder das Derivat derselben im Wesentlichen frei ist von Sulfonatfunktionalität.

2. Sulfonatfunktionelles Polyesterpolyol nach Anspruch 1 mit einer Farbquantenzahl von weniger als etwa 50.

3. Sulfonatfunktionelles Polyesterpolyol nach Anspruch 1, bei dem die ungesättigte Polycarbonsäure oder das Derivat derselben eine durchschnittliche Konzentration von weniger als etwa 0,1 Äquivalent Sulfonatfunktionalität pro Molekül hat.

4. Sulfonatfunktionelles Polyesterpolyol nach Anspruch 1, bei dem das Lacton ε-Caprolacton oder Methyl-ε-caprolacton ist.

5. Polyurethan, das aus Reaktanten gewonnen ist, die ein Polyisocyanat und ein sulfonatfunktionelles Polyesterpolyol nach Anspruch 1 umfassen.

6. Sulfonatfunktionelles Polyesterpolyol mit der folgenden Formel: 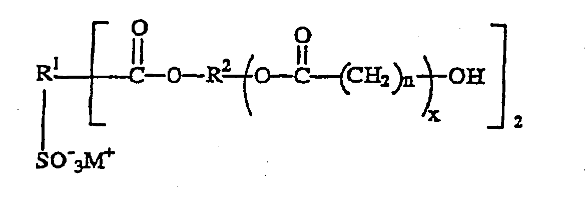 wo:
R¹ eine dreiwertige aliphatische Kohlenwasserstoffgruppe mit von etwa 2 bis etwa 8 Kohlenstoffatomen ist;
M⁺ ein positiv geladenes Gegenion ist;
x von etwa 2 bis etwa 80 ist;
n von etwa 2 bis etwa 17 ist; und
R² ein zweiwertiges Kohlenwasserstoffradikal mit von etwa 2 bis etwa 12 Kohlenstoffatomen ist;
**dadurch gekennzeichnet, dass** das sulfonatfunktionelle Polyesterpolyol eine Farbquantenzahl von weniger als etwa 50 hat.

7. Sulfonatfunktionelles Polyesterpolyol nach Anspruch 6 mit einer Farbquantenzahl von weniger als etwa 25.

8. Sulfonatfunktionelles Polyesterpolyol nach Anspruch 6 mit einem Molekulargewicht von etwa 450 bis etwa 10.000 g/mol.

9. Verfahren zur Herstellung eines sulfonatfunktionellen Polyesterpolyols mit einer niedrigen Farbquantenzahl, mit den folgenden Schritten: (a) Umsetzen einer ungesättigten Polycarbonsäure oder eines Derivats derselben aus der aus Maleinsäure, Fumarsäure, Itaconsäure, Mesaconsäure, Citraconsäure, Muconsäure, Anhydriden dieser Säuren und jeder Mischung davon bestehenden Gruppe mit einem aliphatischen Diol mit von etwa 2 bis etwa 12 Kohlenstoffatomen zu einem ungesättigten Polyol; wobei die ungesättigte Polycarbonsäure oder das Derivat derselben im Wesentlichen frei ist von Sulfonatfunktionalität; (b) Umsetzen des ungesättigten Polyols mit einem Sulfonierungsmittel zu einem sulfonatfunktionellen Polyol; und (c) Umsetzen des sulfonatfunktionellen Polyols mit einem Lacton, um das sulfonatfunktionelle Polyesterpolyol bereitzustellen.

## Revendications

1. Polyol de polyester portant un ou plusieurs groupes fonctionnels sulfonate formé à partir des réactifs comprenant :
(i) un poly(acide carboxylique) insaturé ou un dérivé d'un tel acide choisi parmi un élément de l'ensemble formé par l'acide maléique, l'acide fumarique, l'acide itaconique, l'acide mésaconique, l'acide citraconique, l'acide muconique, des anhydrides de tels acides, et leurs mélanges ;
(ii) un diol aliphatique comportant environ 2 à 12 atomes de carbone ;
(iii) une lactone ;
(iv) et, un agent de sulfonation,
**caractérisé en ce que** le poly(acide carboxylique) insaturé ou un dérivé d'un tel acide est pratiquement exempt de groupes fonctionnels sulfonate.

2. Polyol de polyester portant un ou plusieurs groupes fonctionnels sulfonate selon la revendication 1 dont la couleur est inférieure à environ 50.

3. Polyol de polyester portant un ou plusieurs groupes fonctionnels sulfonate selon la revendication 1 dans lequel la concentration moyenne du poly(acide carboxylique) insaturé ou d'un dérivé d'un tel acide est inférieure à environ 0,1 équivalent de groupe fonctionnel sulfonate par molécule.

4. Polyol de polyester portant un ou plusieurs groupes fonctionnels sulfonate selon la revendication 1 dans lequel la lactone représente la ε-caprolactone ou la méthyl-ε-caprolactone.

5. Polyuréthane formé à partir de réactifs comprenant un polyisocyanate et un polyol de polyester portant un ou plusieurs groupes fonctionnels sulfonate selon la revendication 1.

6. Polyol de polyester portant un ou plusieurs groupes fonctionnels sulfonate répondant à la formule suivante : 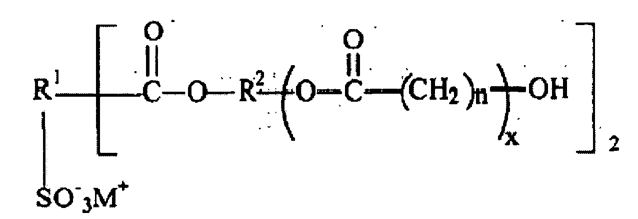 dans laquelle
R¹ représente un radical hydrocarboné aliphatique trivalent comportant environ 2 à 8 atomes de carbone ;
M⁺ représente un contre-ion chargé positivement ;
x vaut d'environ 2 à 80 ;
n vaut d'environ 2 à 17 ;
et R² représente un radical hydrocarboné divalent comportant environ 2 à 12 atomes de carbone ;
**caractérisé en ce que** le polyol de polyester portant un ou plusieurs groupes fonctionnels sulfonate présente une couleur inférieure à environ 50.

7. Polyol de polyester portant un ou plusieurs groupes fonctionnels sulfonate selon la revendication 6 dont la couleur est inférieure à environ 25.

8. Polyol de polyester portant un ou plusieurs groupes fonctionnels sulfonate selon la revendication 6 dont la masse molaire vaut d'environ 450 à environ 10 000 g/mole.

9. Procédé de préparation d'un polyol de polyester portant un ou plusieurs groupes fonctionnels sulfonate faiblement coloré, comportant le fait de :
(a) mettre à réagir un poly(acide carboxylique) insaturé ou un dérivé d'un tel acide choisi parmi un élément de l'ensemble formé par l'acide maléique, l'acide fumarique, l'acide itaconique, l'acide mésaconique, l'acide citraconique, l'acide muconique, des anhydrides de tels acides, et leurs mélanges, avec un diol aliphatique comportant environ 2 à 12 atomes de carbone afin de former un polyol insaturé ; ledit poly(acide carboxylique) insaturé ou dérivé d'un tel acide étant pratiquement exempt de groupes fonctionnels sulfonate ;
(b) mettre à réagir le polyol insaturé avec un agent de sulfonation afin de former un polyol portant un ou plusieurs groupes fonctionnels sulfonate ;
(c) et mettre à réagir le polyol portant un ou plusieurs groupes fonctionnels sulfonate avec une lactone afin d'obtenir le polyol de polyester portant un ou plusieurs groupes fonctionnels sulfonate.
